# EUROPÄISCHE PATENTSCHRIFT

(11) **EP 1 649 331 B1**
(45) Veröffentlichungstag und Bekanntmachung des Hinweises auf die Patenterteilung: **25.04.2007**
(21) Anmeldenummer: 04740866.1
(22) Anmeldetag: 09.07.2004
(51) Int. Cl.: G05B 19/418, G05B 19/12

(54) **SYSTEM UND VERFAHREN ZUR IDENTIFIZIERUNG VON AUTOMATISIERUNGSKOMPONENTEN**
SYSTEM AND METHOD FOR THE IDENTIFICATION OF AUTOMATION COMPONENTS
SYSTEME ET PROCEDE POUR IDENTIFIER DES COMPOSANTS D'AUTOMATISATION

(30) Priorität: 01.08.2003 DE 10335035
(43) Veröffentlichungstag der Anmeldung: 26.04.2006
(73) Patentinhaber: SIEMENS AKTIENGESELLSCHAFT, 80333 München (DE)
(72) Erfinder: GÜNTHER, Harald, 90537 Feucht (DE); MUNZ, Dieter, 91315 Höchstadt (DE)
(86) Internationale Anmeldenummer: PCT/EP2004/007587
(87) Internationale Veröffentlichungsnummer: WO 2005/015330

(56) Entgegenhaltungen:
- WO-A-03/017015
- US-A- 5 430 441
- "INFORMATIONSFLUSS DURCH PRODUKTIDENTIFIKATION" WERKSTATT UND BETRIEB, CARL HANSER VERLAG. MUNCHEN, DE, Bd. 124, Nr. 12, Dezember 1991 (1991-12), Seiten 959-960, XP000252517 ISSN: 0043-2792

## Beschreibung

Die Erfindung betrifft ein System zur Identifizierung von Automatisierungskomponenten, insbesondere von Sensoren, Aktoren und Leitungskomponenten eines Automatisierungssystems. Die Erfindung betrifft weiter ein Verfahren zur Identifizierung von Automatisierungskomponenten, eine Identifikationseinheit sowie eine Leseeinheit für ein System zur Identifizierung von Automatisierungskomponenten.

Die Erfindung kommt insbesondere auf dem Gebiet der Automatisierungstechnik zum Einsatz. Automatisierte Produktions- und Fertigungsanlagen bestehen prinzipiell aus den zu automatisierenden Anlagenteilen (Produktions- und Fertigungseinrichtungen), aus dem Automatisierungssystem und aus Koppelelementen zwischen Anlage und Automatisierungssystem (Sensoren, Aktoren und den für deren Anschaltung notwendige Leitungskomponenten. Für die Erfassung und Beeinflussung von Prozessgrößen (Temperatur, Druck, Ventilstellung, etc.) werden häufig passive nichtintelligente Sensoren sowie nichtintelligente Aktoren verwendet. Hierzu gehören Sensoren (Thermoelemente, Thermowiderstände, Drucksensoren, Widerstandgeber, Stellungssensoren, etc.), Aktoren (Ventile, Relais, Motoren, etc.) und Leitungskomponenten (Thermoleitungen, Ausgleichsleitungen, Kompensationsdosen, etc.).

Aus der WO 03/017015 A1 ist ein Verfahren zur Kennzeichnung von Baugruppen oder Baueinheiten, welche aus wenigstens zwei Einzelkomponenten bestehen, bekannt. Bei der Herstellung und Montage der Einzelkomponenten werden charakteristische Daten der Einzelkomponenten wie z.B. deren Herkunft, charakterisierende Eigenschaftswerte oder die Fertigung der Einzelkomponenten charakterisierende Daten in einem beliebigen Datenspeicher abgelegt. Bei der Montage der Einzelkomponenten zur Baugruppe oder Baueinheit werden die Baugruppe oder Baueinheit charakterisierende Daten wie beispielsweise deren Eigenschaftskennwerte, Betriebs- und/oder Funktionsdaten der Baugruppe oder Baueinheit usw. erfasst. Die die Einzelkomponenten charakterisierende Daten werden aus dem Datenspeicher ausgelesen und mit den die Baugruppe oder die Baueinheit charakterisierenden Daten in eine auslesbare programmierbare Datenspeichereinheit übernommen, welche an der Baugruppe oder der Baueinheit angeordnet ist.

Diese Aufgabe wird jeweils durch die Kombination der in den Ansprüchen 1, 8, 12 und 16 angegebenen Merkmale gelöst.

Der Erfindung liegt die Erkenntnis zugrunde, dass sowohl bei Anlagen-Neuinstallation wie auch bei Anlagen-Wartung latent die Gefahr besteht, dass falsche Komponenten angeschlossen sind und nicht erkannt werden. Daraus folgend kann die Qualität des Herstellungsprozesses wie auch der Produkte erheblich beeinträchtigt werden und zu Produktionsausschuß führen. Ebenso entsteht in diesen Fällen erheblicher Aufwand, die Ursache der Beeinträchtigung zu lokalisieren und zu beheben. Bei dem erfindungsgemäßen System hingegen wird jede zu identifizierende Automatisierungskomponente mit einer Identifikationseinheit versehen. Die Aufgabe der Identifikationseinheit besteht darin, bei Aktivierung einen Identifikationscode auszugeben, der eine eindeutige Identifikation der zugehörigen Komponente erlaubt. Die Identifikationseinheit kann dabei nachträglich an eine Komponente angebracht werden oder bereits bei der Komponentenherstellung untrennbar mit dieser verbunden werden bzw. in dieser integriert sein. Das Auslesen des Identifikationscodes erfolgt mit Hilfe der Leseeinheit, die beispielsweise in den Peripheriebaugruppen des Automatisierungssystems oder in einer Bedieneinheit des Automatisierungssystems angeordnet oder mit dieser gekoppelt ist. Hierdurch wird das Automatisierungssystem in die Lage versetzt, selbständig die jeweils angeschlossenen Komponenten zu identifizieren und damit die Korrektheit der Anlage zu überprüfen und zu überwachen.

Eine Kommunikation zwischen Identifikationseinheit und Leseeinheit unter Nutzung ohnehin vorhandener Übertragungswege kann auf einfache Weise dadurch erfolgen, dass die Leseeinheit zur Ankopplung an eine Peripheriebaugruppe und/oder an ein Bediengerät des Automatisierungssystems vorgesehen ist.

Eine automatische bzw. anwendergesteuerte Überprüfung bzw. Kontrolle der jeweils vorhandenen Automatisierungskomponenten wird dadurch sichergestellt, dass die Leseeinheit zur Aktivierung der Identifikationseinheiten und/oder zur Abfrage der Identifikationscodes der angeschlossenen Automatisierungskomponenten vorgesehen ist.

Eine autarke Betriebssicherheit der Identifikationseinheiten kann dadurch erzielt werden, dass die Leseeinheit zur Einspeisung der zur Versorgung der Identifikationseinheiten notwendigen Energie in den Peripheriekanal vorgesehen ist.

Wesentliche Grundbestandteile der Identifikationseinheit bestehen darin, dass die Identifikationseinheit aus einer elektronischen Schaltung und einer Ankopplung an die zu identifizierende Automatisierungskomponente gebildet wird.

Vorteilhafte Ausgestaltungsformen für die Identifikationseinheiten für Neu- wie auch für Altsysteme werden dadurch erzielt, dass die Identifikationseinheit als separate Einheit zur nachträglichen Anbringung an eine Automatisierungskomponente oder als untrennbar mit der Automatisierungskomponente verbundene Einheit ausgebildet ist.

Eine automatische Aktivierung der Identifikationseinheiten wird dadurch ermöglicht, dass das System Mittel zur Aktivierung der Identifikationseinheit(en) in der Weise aufweist, dass bei Energieeinspeisung in einen Peripheriekanal die Identifikationseinheit ihren Identifikationscode bei Erreichen eines ausreichenden Energiepegels selbsttätig aussendet.

Eine nach vorgebbaren Kriterien selektive Adressierung bestimmter Automatisierungskomponenten kann dadurch erzielt werden, dass das System Mittel zur Aktivierung der Identifikationseinheit(en) in der Weise aufweist, dass durch selektives Ansprechen einer vorgebbaren Komponentenklasse die der vorgebbaren Komponentenklasse zugeordnete Identifikationseinheit ihren Identifikationscode aussendet.

Im folgenden wird die Erfindung anhand der in den Figuren dargestellten Ausführungsbeispiele näher beschrieben und erläutert.

Es zeigen:
- FIG 1: ein Blockschaltbild als Prinzipdarstellung eines Automatisierungssystems mit einem System zur Identifizierung der Automatisierungskomponenten,
- FIG 2: ein Ausführungsbeispiel eines Systems zur Identifizierung der Automatisierungskomponenten,
- FIG 3: eine Prinzipdarstellung für das Zusammenwirken einer Identifikationseinheit und einer Leseeinheit eines Systems zur Identifizierung der Automatisierungskomponenten und
- FIG 4: einen Prozessablauf zur Identifizierung der Automatisierungskomponenten.

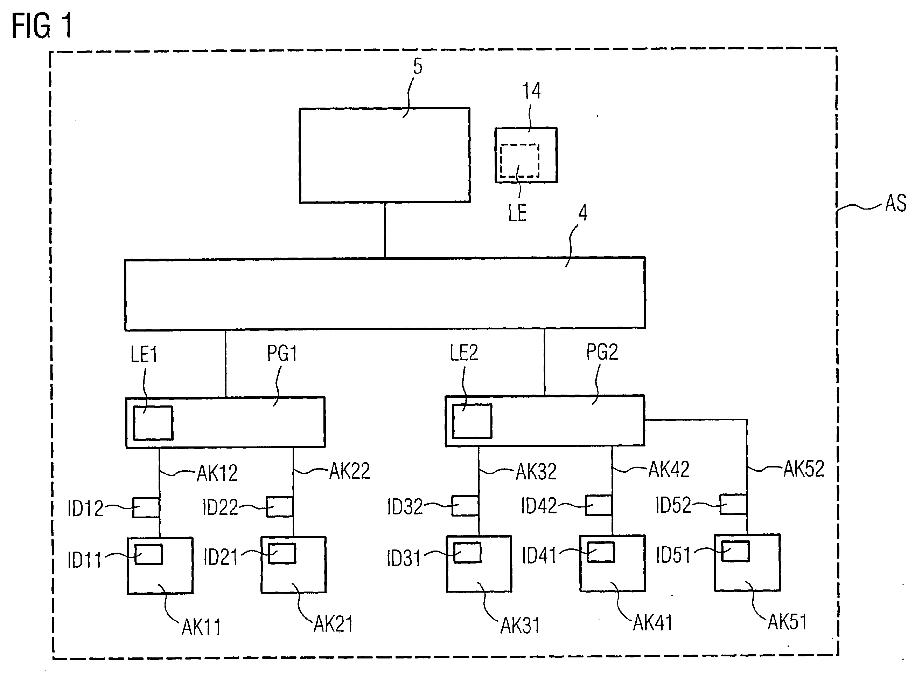

FIG 1 zeigt die Prinzipdarstellung eines Automatisierungssystems AS. Das Automatisierungssystem AS besteht aus Automatisierungskomponenten AK11..AK52, beispielsweise Sensoren, Aktoren und sonstigen Leitungskomponenten. Die Automatisierungskomponenten AK11..AK52 sind jeweils mit Peripheriegeräten PG1, PG2 verbunden, während die Peripheriegeräte PG1, PG2 wiederum mit einer Steuerungseinrichtung 4 gekoppelt sind. Als Anwenderschnittstelle dient ein Bedien- und Beobachtungssystem 5, welches mit der Steuerung 4 verbunden ist. Den Automatisierungskomponenten AK11..AK52 sind jeweils Identifikationseinheiten ID11..ID52 zugeordnet. Der Begriff "Automatisierungskomponente" wird dabei so umfassend verstanden, dass hierunter sowohl Sensoren, Aktoren, als auch Anschluss- und Leitungskomponenten einschließlich Kabeln etc. verstanden wird. Die Identifikationseinheiten ID11..ID52 weisen jeweils einen Speicher auf, in dem ein die Automatisierungskomponenten AK11..AK52 jeweils eindeutig identifizierender Identifikationscode gespeichert ist. Jede Automatisierungskomponente AK11..AK52 ist dabei durch einen eindeutigen und eigens ihr zugeordneten Identifikationscode gekennzeichnet. Die Identifikationseinheiten ID11..ID52 sind über Leseeinheiten LE, LE1, LE2 aktivierbar, die in den Peripheriegeräten PG1, PG2, und/oder in einem mobilen Bediengerät 14 angeordnet sind.

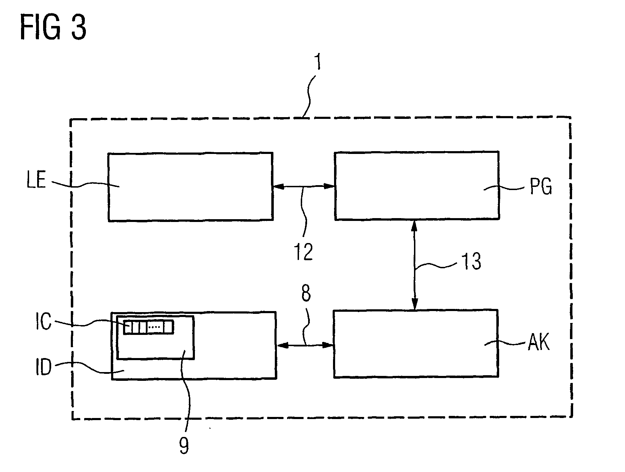

Die Besonderheit des in FIG 1 dargestellten Automatisierungssystems AS besteht darin, dass jede angeschlossene Automatisierungskomponente AK11..AK52, beispielsweise ein Sensor, ein Aktor, ein Kabel etc. mit einer Identifikationseinheit ID11..ID52 ausgestattet ist. Die Identifikationseinheiten ID11..ID52 bestehen aus einer elektronischen Schaltung (z.B. einem RFID-Chip oder diskreten Schaltung) und einer galvanisch trennenden (induktiv, kapazitiv, funktechnisch) oder galvanisch leitenden Ankopplung an die zu identifizierende Komponente AK11..AK52. Die Aufgabe der Identifikationseinheit ID11..ID52 besteht darin, bei Aktivierung den in ihr jeweils gespeicherten Identifikationscode IC (vgl. Fig. 3) auszugeben. Dieser Identifikationscode ermöglicht eine eindeutige Identifikation der zugehörigen Komponente AK. Die Identifikationseinheit ID11..ID52 kann nachträglich an die Automatisierungskomponente angebracht werden oder bereits bei der Komponentenherstellung untrennbar mit dieser verbunden werden. Die Identifikationseinheit ID11..ID52 kann aktiv, wird aber im Regelfall passiv ausgebildet sein. Sie ist in diesem Fall ohne eigene Energieversorgung, damit wartungsfrei und wird nur bei Bedarf über die ohnehin vorhandenen Leitungen von der Peripheriebaugruppe PG1, PG2 mit Energie versorgt. Hierfür sind die Peripheriebaugruppen PG1, PG2 des Automatisierungssystems und/oder das mobile Bedien- und Beobachtungssystem 14 mit einer Leseeinheit LE, LE1, LE2 ausgestattet. Die Leseeinheiten LE1, LE2 der Peripheriebaugruppen PG1, PG2 können über eine galvanisch trennende (induktiv, kapazitiv, funktechnisch) oder galvanisch leitende Ankopplung selektiv an die einzelnen Peripheriekanäle der Peripheriebaugruppen PG1, PG2 angeschaltet werden. Die Aufgabe der Leseeinheiten LE, LE1, LE2 besteht im wesentlichen darin, die zur Versorgung der Identifikationseinheiten notwendige Energie in den jeweiligen Peripheriekanal einzuspeisen, hierdurch die Identifikationseinheiten ID11..ID52 der angeschlossenen Komponenten AK11..AK52 jeweils zu aktivieren und so die Identifikationscodes der angeschlossenen Komponenten AK11..AK52 abzufragen.

Die Energie- und Datenübertragung erfolgt dabei kanalselektiv, wenn jeweils nur ein Kanal mit Energie versorgt wird. Die Energie- und Datenübertragung erfolgt dabei weitgehend leitungsgebunden über die vorhandene Sensor-/Aktor-Verkabelung. Nur lokal im Nahbereich der Ankopplungen können neben galvanisch leitenden auch galvanisch trennende Verfahren (kapazitiv, induktiv, funktechnisch) benutzt werden, um Einflüsse auf die Mess- bzw. Stellgrößen zu vermeiden. Mit Hilfe des in FIG 1 dargestellten Automatisierungssystems AS wird es somit möglich, bisher nicht erkennbare Komponenten nun eindeutig zu identifizieren. Dies ist eine grundlegende Voraussetzung für neue Systemeigenschaften mit hohen Kundennutzen. Das gezeigte System bzw. Verfahren ist umfassend und für alle anschließbaren Komponenten geeignet. Es sind keine zusätzlichen Leitungen für die Identifikation der Komponenten erforderlich. Je nach Kundenwunsch, kann die Identifizierung der Automatisierungskomponenten auch schrittweise eingeführt bzw. nachgerüstet werden. Neben einer eindeutigen Identifizierung ergibt sich durch die kanalselektive und leitungsgeführte Energie- und Datenübertragung auch automatisch die Zuordnung der Komponenten AK11..AK52 zu den Peripheriekanälen.

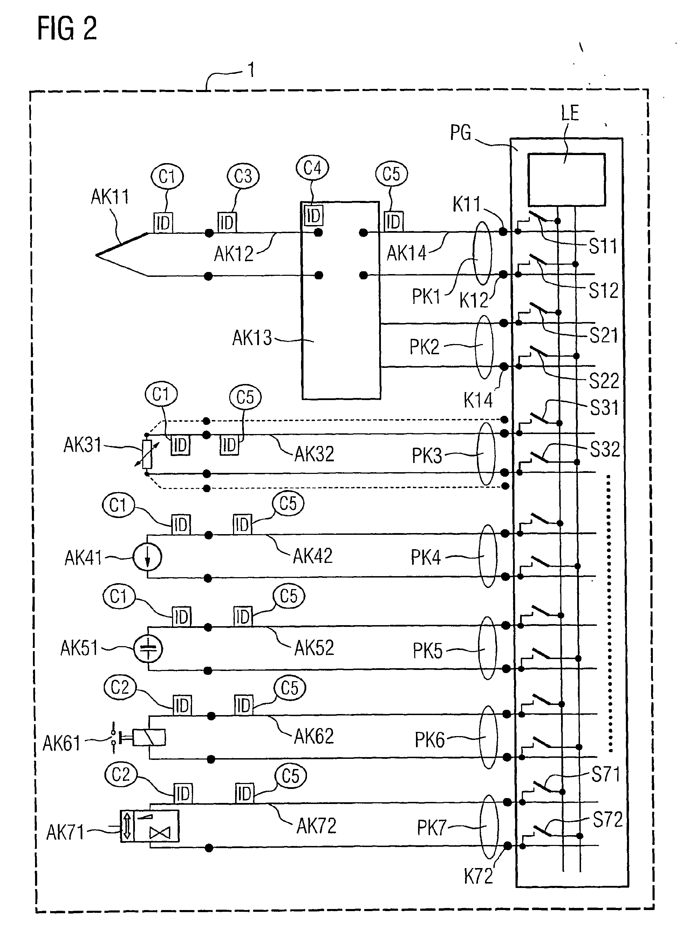

FIG 2 zeigt ein Ausführungsbeispiel eines Identifizierungssystems 1 zur Identifizierung von Automatisierungskomponenten AK11..AK72. Dabei sind nur die im Zusammenhang mit dem System zur Identifizierung erforderlichen Bestandteile dargestellt. Das Identifizierungssystem 1 besteht im wesentlichen aus einer Leseeinheit LE, die über Schalter S11..S72 jeweils mit Peripheriekanälen PK1..PK7 verbindbar ist. Die Leseeinheit LE ist beispielsweise Bestandteil einer Peripheriebaugruppe PG, wie dies bereits im Zusammenhang mit FIG 1 erläutert wurde. An die Klemmen K11..K72 der Peripheriekanäle PK1..PK7 sind jeweils Automatisierungskomponenten AK11..AK72 angeschlossen. Bei der Automatisierungskomponente AK11 handelt es sich beispielsweise um einen Temperatursensor, der über eine Datenleitung AK12, eine Komponentenanschlussdose AK13 und eine weitere Anschlussleitung AK14 an die Klemmen K11, K12 des Peripheriekanals PK1 der Peripheriebaugruppe PG angeschlossen ist. Die Klemmen K13..K14 sind ebenfalls mit der Komponentenanschlussdose AK13 verbunden bzw. mit der Leseeinheit verbindbar. Bei der Automatisierungskomponente AK31 handelt es sich um eine Widerstandsmesskomponente als Sensor, der über eine Datenleitung AK32 an den Peripheriekanal PK3 der Peripheriebaugruppe PG angeschlossen bzw. mit der Leseeinheit LE über die Leseschalter S31, S32 verbindbar ist.

Als weitere Beispiele sind in FIG 2 beispielsweise eine Strommesskomponente AK41, eine Spannungsmesskomponente AK51, ein als Relais ausgebildeter Aktor AK61 sowie als weitere Automatisierungskomponente ein Ventil AK71 dargestellt. Den Automatisierungskomponenten AK11..AK72 des in FIG 2 dargestellten Identifikationssystems 1 sind jeweils Identifikationseinheiten ID zugeordnet. An dieser Stelle sei erwähnt, dass der Begriff Automatisierungskomponente AK bei dem in FIG 2 dargestellten Ausführungsbeispiel sowohl für die Sensoren AK11, AK31, AK41, AK51, wie auch für die Aktoren AK61, AK71 sowie für die Leitungskomponenten AK12, AK13, AK14 usw. verwendet wird.

Eine weitere Besonderheit des in FIG 2 dargestellten Identifikationssystems 1 besteht darin, dass in den in den Automatisierungskomponenten AK11..AK72 bzw. in den Identifikationseinheiten ID11..ID72 gespeicherten Identifizierungscodes jeweils eine komponentenspezifische Information gespeichert ist. Diese komponentenspezifische Information beinhaltet beispielsweise eine hierarchische Informationsgliederung in Komponentenklassen C1 für Sensoren, C2 für Aktoren, C3 für Thermokabel, C4 für Zubehör und C5 für Kabel. Der in den Identifikationseinheiten ID gespeicherte Identifizierungscode kann darüber hinaus weitere Klassifizierungen wie beispielsweise Komponentenart, z.B. bei Klasse: Sensor, Thermoelement /Thermowiderstand etc., Typ, Hersteller und gegebenenfalls weitere Informationsfelder bis hin zum Ausbau in Form eines elektronischen Datenblatts beinhalten. Die Codierung der Information des Identifizierungscodes ist im Prinzip dabei frei wählbar, kann sich aber für eine breite Marktabdeckung auch an existierenden Standards, wie beispielsweise dem Electronic Product Codes orientieren. Die Aktivierung der Identifikationseinheiten ID kann auf zwei Arten erfolgen:

Durch bloßes Anlegen der Energieversorgung - in diesem Fall sendet die Identifikationseinheit ID ihren Identifikationscode bei Erreichen eines ausreichenden Versorgungspegels selbsttätig aus. In der Regel erfordert dies eine sogenannte Multitagfähigkeit der Leseeinheit. Eine weitere Möglichkeit besteht darin, ein selektives Ansprechen der Automatisierungskomponenten AK.. durchzuführen, z.B. durch Abfrage der jeweiligen Komponentenklasse, beispielsweise der Komponentenklasse C1 für Sensoren. In diesem Fall sendet die Identifikationseinheit ID ihren Identifikationscode nur dann aus, wenn sie das entsprechende Abfragekriterium der entsprechenden Komponentenklasse erfüllt, d.h. der Komponentenklasse Sensor C1 angehört. Hierdurch sind auch ohne aufwändige Multitagfähigkeit mehrere Komponenten an einem Peripheriekanal identifizierbar bzw. Detailinformationen einer Komponente selektiv abfragbar.

Das Identifikationssystem 1 kann beispielsweise beim Einschalten bzw. beim Hochfahren einer Anlage für jede Peripheriebaugruppe selbständig einen Identifikationslauf der angeschlossenen Sensoren, Aktoren, Leitungen und Zubehörkomponenten durchführen. Hierzu wird für jeweils einen einzelnen Peripheriekanal im wesentlichen folgende Prozedur durchlaufen:
- Anschalten der Leseeinheit an den Peripheriekanal,
- Energieeinspeisung in den Periepheriekanal,
- Aktivieren der Identifikationseinheiten, Abfragen der Identifikationscodes,
- Energieeinspeisung beenden,
- Trennen der Leseeinheit vom Peripheriekanal.

Diese Prozedur wird sequenziell für jeden der vorhandenen Peripheriekanäle einer Peripheriebaugruppe durchlaufen. Nach Abschluss des Identifikationslaufs lässt sich anhand der Identifikationscodes die Außenbeschaltung eines Peripheriekanals eindeutig rekonstruieren und für Plausibilitätsüberprüfung, Konformitätsüberprüfung mit der projektierten Anlagenkonfiguration, Autokonfiguration, Sensoradaption etc. verwenden. Ist die Leseeinheit beispielsweise in ein mobiles Bediengerät integriert, so kann das Verfahren auch bei der Installation und Wartung vor Ort für die Beschaltungsidentifikation eines einzelnen Peripheriekanals benutzt werden.

FIG 3 zeigt eine Prinzipdarstellung für das Zusammenwirken einer Identifikationseinheit ID und einer Leseeinheit LE eines Systems 1 zur Identifizierung der Automatisierungskomponenten. In FIG 3 ist dabei nochmals vereinfachend eine Peripheriebaugruppe PG dargestellt, die mit einer Automatisierungskomponente AK kommuniziert. Der Peripheriebaugruppe PG ist über eine Kommunikationsschnittstelle 12 eine Leseeinheit LE zugeordnet, während der Automatisierungskomponente AK über eine weitere Kommunikationsschnittstelle 8 eine Identifikationseinheit ID zugeordnet ist. Die Identifikationseinheit ID weist einen Speicher 9 zur Speicherung eines Identifizierungscodes IC für die Automatisierungskomponente AK auf. Bezüglich der Funktionsweise des Identifikationssystems 1 wird zur Vermeidung von Wiederholungen auf die bereits im Zusammenhang mit den FIG 1 und 2 erfolgten Ausführungen verwiesen.

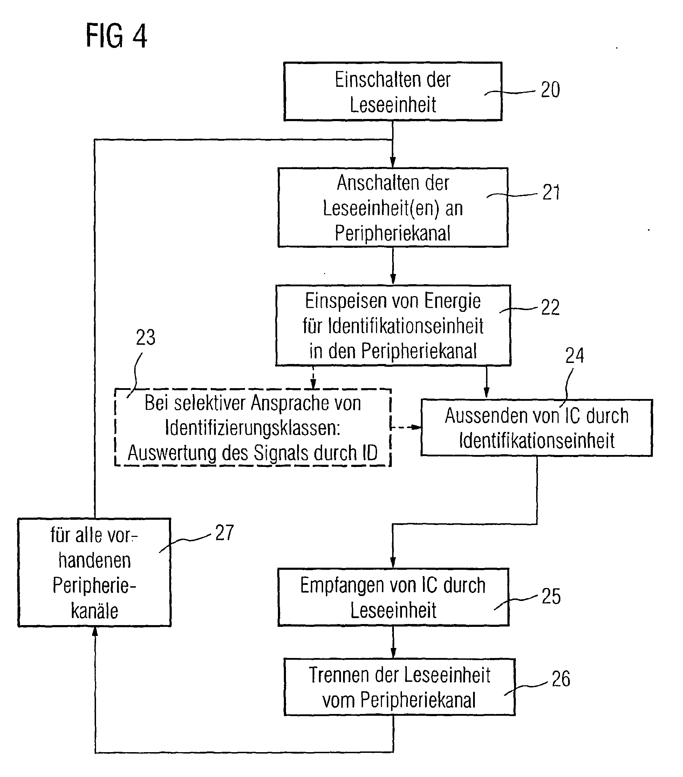

FIG 4 zeigt einen beispielhaften Prozessablauf zur Identifizierung der Automatisierungskomponenten, wie sie beispielsweise im Zusammenhang mit den in den FIG 1 bis 3 Identifikationssystemen zum Einsatz kommen kann. Die Prozedur beginnt mit einem Einschalten der Leseeinheit im Schritt 20, als nächster Prozessschritt erfolgt ein Anschalten der Leseeinheit an einen Peripheriekanal n im Prozessschritt 21, in einem Prozessschritt 22 erfolgt ein Einspeisen von Energie in den Peripheriekanal. Optional kann, wie im Zusammenhang mit FIG 2 erläutert wurde, im Prozessschritt 23 auch eine selektive Ansprache von vorgebbaren Identifizierungsklassen und/oder sonstigen Identifizierungsmerkmalen erfolgen. Im folgenden Prozessschritt 24 erfolgt ein Aktivieren der Identifikationseinheiten, d.h. ein Senden des Identifikationscodes durch die Identifikationseinheit. Im folgenden Prozessschritt 25 empfängt die Leseeinheit den Identifikationscode, beispielsweise durch die mit dem Peripheriekanal bzw. mit dem mobilen Bediengerät bestehende ohnehin vorhandene Datenverbindung. Im Prozessschritt 26 erfolgt ein Trennen der Leseeinheit vom Peripheriekanal. Mit Hilfe des Blocks 27 wird visualisiert, dass die in FIG 4 dargestellte Prozedur für sämtliche vorhandenen Peripheriekanäle durchlaufen werden kann.

Zusammenfassend betrifft die Erfindung somit ein System und ein Verfahren zur Identifizierung von passiven Automatisierungskomponenten, insbesondere von Sensoren, Aktoren und Leitungskomponenten. Hierzu wird jede zu identifizierende Komponente (Sensor, Aktor, Kabel, Kompensationsdose, etc.) mit einer Identifikationseinheit ausgestattet, in der ein Identifikationscode zur Identifizierung der Automatisierungskomponente gespeichert ist und die diesen bei Aktivierung aussendet bzw. ausliest. Die Identifikationseinheit besteht bevorzugt aus einer elektronischen Schaltung (z.B. RFID-Chip oder diskrete Schaltung) und einer galvanisch trennenden (induktiv, kapazitiv, funktechnisch) oder galvanisch leitenden Ankopplung, an die zu identifizierende Komponente. Die Identifikationseinheit kann nachträglich an eine Komponente angebracht werden oder bereits bei der Komponentenherstellung untrennbar mit dieser verbunden werden.

## Patentansprüche

1. System zur Identifizierung von Automatisierungskomponenten (AK), insbesondere von Sensoren, Aktoren und Leitungskomponenten eines Automatisierungssystems (AS)
- mit einer jeweils einer Automatisierungskomponente (AK) zugeordneten Identifikationseinheit (ID),
- mit einem in der Identifikationseinheit (ID) gespeicherten Identifikationscode (IC) zur Identifizierung der jeweiligen Automatisierungskomponente (AK) und
- mit einer Leseeinheit (LE) zum Auslesen des Identifikationscodes (IC) aus der Identifikationseinheit (ID),
**dadurch gekennzeichnet ,**
**dass** das System Mittel zur Aktivierung der Identifikationseinheit(en) (ID) in der Weise aufweist, dass durch selektives Ansprechen einer vorgebbaren Komponentenklasse die der vorgebbaren Komponentenklasse zugeordnete Identifikationseinheit (ID) ihren Identifikationscode (IC) aussendet.

2. System nach Anspruch 1,
**dadurch gekennzeichnet,**
**dass** die Leseeinheit (LE) zur Ankopplung an eine Peripheriebaugruppe (2) und/oder an ein Bediengerät (14) des Automatisierungssystems (AS) vorgesehen ist.

3. System nach einem der Ansprüche 1 oder 2,
**dadurch gekennzeichnet,**
**dass** die Leseeinheit (LE) zur Aktivierung der Identifikationseinheiten (ID) und/oder zur Abfrage der Identifikationscodes (IC) der angeschlossenen Automatisierungskomponenten (AK) vorgesehen ist.

4. System nach einem der Ansprüche 1 bis 3,
**dadurch gekennzeichnet,**
**dass** die Leseeinheit (LE) zur Einspeisung der zur Versorgung der Identifikationseinheiten (ID) notwendigen Energie in den Peripheriekanal(PK) vorgesehen ist.

5. System nach einem der Ansprüche 1 bis 4,
**dadurch gekennzeichnet,**
**dass** die Identifikationseinheit (ID) aus einer elektronischen Schaltung und einer Ankopplung an die zu identifizierende Automatisierungskomponente (AK) gebildet wird.

6. System nach einem der Ansprüche 1 bis 5,
**dadurch gekennzeichnet,**
**dass** die Identifikationseinheit (ID) als separate Einheit zur nachträglichen Anbringung an eine Automatisierungskomponente (AK) oder als untrennbar mit der Automatisierungskomponente (AK) verbundene Einheit ausgebildet ist.

7. System nach einem der Ansprüche 1 bis 6,
**dadurch gekennzeichnet,**
**dass** das System Mittel zur Aktivierung der Identifikationseinheit(en) (ID) in der Weise aufweist, dass durch Anlegen der Energieversorgung die Identifikationseinheit (ID) ihren Identifikationscode (IC) bei Erreichen eines ausreichenden Versorgungspegels selbsttätig aussendet.

8. Identifikationseinheit (ID) für ein System zur Identifizierung von Automatisierungskomponenten (AK), insbesondere von Sensoren, Aktoren und Leitungskomponenten eines Automatisierungssystems (AS), wobei Identifikationseinheit (ID) zur Zuordnung jeweils zu einer Automatisierungskomponente (AK) vorgesehen ist,
- mit einem in der Identifikationseinheit gespeicherten Identifikationscode (IC) zur Identifizierung der jeweiligen Automatisierungskomponente (AK) und
- mit einer Sendeeinheit zum Aussenden des Identifikationscodes (IC) aus der Identifikationseinheit (ID) an eine Leseeinheit (LE), **dadurch gekennzeichnet, dass**
die Identifikationseinheit (ID) Mittel zur Aktivierung der Sendeeinheit in der Weise aufweist, dass durch selektives Ansprechen einer vorgebbaren Komponentenklasse die der vorgebbaren Komponentenklasse zugeordnete Identifikationseinheit (ID) ihren Identifikationscode (IC) aussendet.

9. Identifikationseinheit (ID) nach Anspruch 8,
**dadurch gekennzeichnet,**
**dass** die Identifikationseinheit (ID) aus einer elektronischen Schaltung und einer Ankopplung an die zu identifizierende Automatisierungskomponente (AK) gebildet wird.

10. Identifikationseinheit (ID) nach einem der Ansprüche 8 oder 9,
**dadurch gekennzeichnet,**
**dass** die Identifikationseinheit (ID) als separate Einheit zur nachträglichen Anbringung an eine Automatisierungskomponente (AK) oder als untrennbar mit der Automatisierungskomponente (AK) verbundene Einheit ausgebildet ist.

11. Identifikationseinheit (ID) nach einem der Ansprüche 8 bis 10,
**dadurch gekennzeichnet,**
**dass** die Sendeeinheit der Identifikationseinheit (ID) derart ausgebildet ist, dass die Identifikationseinheit (ID) ihren Identifikationscode (IC) bei Erreichen eines ausreichenden Versorgungspegels selbsttätig aussendet.

12. Leseeinheit (LE) für ein System zur Identifizierung von Automatisierungskomponenten (AK), insbesondere von Sensoren, Aktoren und Leitungskomponenten eines Automatisierungssystems (AS), wobei die Leseeinheit (LE) zur Ankopplung an eine Peripheriebaugruppe (PG) und/oder an ein Bediengerät (14) des Automatisierungssystems (AS), insbesondere zum Einbau in die Peripheriebaugruppe (PG) und/oder in das Bediengerät (14) vorgesehen ist und Mittel zum Empfang eines von einer Identifikationseinheit (ID) einer Automatisierungskomponente (AK) ausgesendeten Identifikationscodes (IC) aufweist, **dadurch gekennzeichnet, dass** die Leseeinheit (LE) Mittel zur Aktivierung der Identifikationseinheit(en) (ID) in der Weise aufweist, dass durch selektives Ansprechen einer vorgebbaren Komponentenklasse die der vorgebbaren Komponentenklasse zugeordnete Identifikationseinheit (ID) ihren Identifikationscode (IC) aussendet.

13. Leseeinheit (LE) nach Anspruch 12,
**dadurch gekennzeichnet,**
**dass** die Leseeinheit (LE) zur Aktivierung der Identifikationseinheiten (ID) und/oder zur Abfrage der Identifikationscodes (IC) der angeschlossenen Automatisierungskomponenten (AK) vorgesehen ist.

14. Leseeinheit (LE) nach einem der Ansprüche 12 oder 13,
**dadurch gekennzeichnet,**
**dass** die Leseeinheit (LE) zur Einspeisung der zur Versorgung der Identifikationseinheiten (ID) notwendigen Energie in den Peripheriekanal (PK) vorgesehen ist.

15. Leseeinheit (LE) nach einem der Ansprüche 12 bis 14,
**dadurch gekennzeichnet,**
**dass** die Leseeinheit (LE) Mittel zur Aktivierung der Identifikationseinheit(en) (ID) in der Weise aufweist, dass durch Anlegen der Energieversorgung die Identifikationseinheit (ID) ihren Identifikationscode (IC) bei Erreichen eines ausreichenden Versorgungspegels selbsttätig aussendet.

16. Verfahren zur Identifizierung von Automatisierungskomponenten (AK), insbesondere von Sensoren, Aktoren und Leitungskomponenten eines Automatisierungssystems (AS), mit folgenden Schritten:
- Zuordnen einer Identifikationseinheit (ID) jeweils zu einer Automatisierungskomponente (AK),
- Speichern eines Identifikationscode (IC) zur Identifizierung der jeweiligen Automatisierungskomponente (AK) in einem Speicher der Identifikationseinheit (ID) und
- programm- und/oder anwendergesteuertes Auslesen des Identifikationscodes (IC) aus der Identifikationseinheit (ID),
**dadurch gekennzeichnet ,**
**dass** die Identifikationseinheit(en) (ID) in der Weise aktiviert werden, dass durch selektives Ansprechen einer vorgebbaren Komponentenklasse die der vorgebbaren Komponentenklasse zugeordnete Identifikationseinheit (ID) ihren Identifikationscode (IC) aussendet.

17. Verfahren nach Anspruch 16,
**dadurch gekennzeichnet,**
**dass** die Leseeinheit (LE) an eine Peripheriebaugruppe (PG) und/oder an ein Bediengerät (14) des Automatisierungssystems (AS) angekoppelt wird oder in der Peripheriebaugruppe (PG) und/oder in dem Bediengerät (14) eingebaut ist.

18. Verfahren nach einem der Ansprüche 16 oder 17,
**dadurch gekennzeichnet,**
**dass** die Leseeinheit (LE) die Identifikationseinheiten (ID) aktiviert und/oder die Identifikationscodes (IC) der angeschlossenen Automatisierungskomponenten (AK) ausliest.

19. Verfahren nach einem der Ansprüche 16 bis 18,
**dadurch gekennzeichnet,**
**dass** die Leseeinheit (LE) die zur Versorgung der Identifikationseinheiten (ID) notwendigen Energie in den Peripheriekanal (PK) einspeist.

20. Verfahren nach einem der Ansprüche 16 bis 19,
**dadurch gekennzeichnet,**
**dass** die Identifikationseinheit (ID) aus einer elektronischen Schaltung und einer Ankopplung an die zu identifizierende Automatisierungskomponente (AK) gebildet wird.

21. Verfahren nach einem der Ansprüche 16 bis 20,
**dadurch gekennzeichnet,**
**dass** die Identifikationseinheit (ID) als separate Einheit zur nachträglichen Anbringung an eine Automatisierungskomponente (AK) oder als untrennbar mit der Automatisierungskomponente (AK) verbundene Einheit ausgebildet ist.

22. Verfahren nach einem der Ansprüche 16 bis 21,
**dadurch gekennzeichnet,**
**dass** die Identifikationseinheit(en) (ID) in der Weise aktiviert werden, dass durch Anlegen der Energieversorgung die Identifikationseinheit (ID) ihren Identifikationscode (IC) bei Erreichen eines ausreichenden Versorgungspegels selbsttätig aussendet.

23. Verfahren nach einem der Ansprüche 16 bis 22,
**dadurch gekennzeichnet,**
**dass** beim Einschalten des Automatisierungssystems die Peripheriebaugruppe (PG) selbständig einen Identifikationslauf der angeschlossenen Automatisierungskomponenten (AK)durchführt, wobei für jeweils einen Peripheriekanal (PK) folgende Prozedur durchlaufen wird:
- Anschalten der Leseeinheit (LE) an den Peripheriekanal (PKn),
- Einspeisen von Energie in den Peripheriekanal (PKn),
- Aktivieren der Identifikationseinheiten (ID) und Abfragen der Identifikationscodes (IC),
- Beenden der Energieeinspeisung und
- Trennen der Leseeinheit (LE) vom Peripheriekanal (PKn).

24. Verfahren nach Anspruch 23,
**dadurch gekennzeichnet,**
**dass** die Prozedur sequentiell für jeden der N vorhandenen Peripheriekanäle (PK) einer Peripheriebaugruppe (PG) durchlaufen wird.

## Claims

1. System for identifying automation components (AK), in particular sensors, actuators and line components of an automation system (AS)
- with an identification unit (ID) assigned respectively to an automation component (AK),
- with an identification code (IC) for identifying the respective automation component (AK) stored in the identification unit (ID) and
- with a read unit (LE) for reading the identification code (IC) from the identification unit (ID),
**characterised in that**
the system has means for activating the identification unit(s) (ID) in the manner that selective addressing of a predefinable component class causes the identification unit (ID) assigned to the predefinable component class to output its identification code (IC).

2. System according to claim 1,
**characterised in that** the read unit (LE) is provided for connection to a peripheral module (2) and/or an operating device (14) of the automation system (AS).

3. System according to one of claims 1 or 2,
**characterised in that** the read unit (LE) is provided to activate the identification units (ID) and/or to scan the identification codes (IC) of the connected automation components (AK).

4. System according to one of claims 1 to 3,
**characterised in that** the read unit (LE) is provided to inject the energy required to supply the identification units (ID) into the peripheral channel (PK).

5. System according to one of claims 1 to 4,
**characterised in that** the identification unit (ID) is made up of an electronic circuit and a connection to the automation component (AK) to be identified.

6. System according to one of claims 1 to 5,
**characterised in that** the identification unit (ID) is configured as a separate unit for subsequent mounting on an automation component (AK) or as a unit connected inseparably to the automation component (AK).

7. System according to one of claims 1 to 6,
**characterised in that** the system has means for activating the identification unit(s) (ID) in the manner that application of the energy supply causes the identification unit (ID) to output its identification code (IC) automatically when an adequate supply level is reached.

8. Identification unit (ID) for a system for identifying automation components, in particular sensors, actuators and line components of an automation system (AS), with an identification unit (ID) being provided for assignment to an automation component (AK) in each instance,
- with an identification code (IC) for identifying the respective automation component (AK) stored in the identification unit and
- with a transmit unit for transmitting the identification code (IC) from the identification unit (ID) to a read unit (LE), **characterised in that**
the identification unit (ID) has means for activating the transmit unit in the manner that selective addressing of a predefinable component class causes the identification unit (ID) assigned to the predefinable component class to output its identification code (IC).

9. Identification unit (ID) according to claim 8,
**characterised in that** the identification unit (ID) is made up of an electronic circuit and a connection to the automation component (AK) to be identified.

10. Identification unit (ID) according to one of claims 8 or 9,
**characterised in that** the identification unit (ID) is configured as a separate unit for subsequent mounting on an automation component (AK) or as a unit connected inseparably to the automation component (AK).

11. Identification unit (ID) according to one of claims 8 to 10,
**characterised in that** the transmit unit of the identification unit (ID) is configured such that the identification unit (ID) outputs its identification code (IC) automatically when an adequate supply level is reached.

12. Read unit (LE) for a system for identifying automation components (AK), in particular sensors, actuators and line components of an automation system (AS), with the read unit (LE) being provided for connection to a peripheral module (PG) and/or an operating device (14) of the automation system (AS), in particular for integration into the peripheral module (PG) and/or the operating device (14), and having means for receiving an identification code (IC) output by an identification unit (ID) of an automation component (AK)
**characterised in that** the read unit (LE) has means for activating the identification unit(s) (ID) in the manner that selective addressing of a predefinable component class causes the identification unit (ID) assigned to the predefinable component class to output its identification code (IC).

13. Read unit (LE) according to claim 12,
**characterised in that** the read unit (LE) is provided to activate the identification units (ID) and/or to scan the identification codes (IC) of the connected automation components (AK)).

14. Read unit (LE) according to one of claims 12 or 13,
**characterised in that** the read unit (LE) is provided to inject the energy required to supply the identification units (ID) into the peripheral channel (PK).

15. Read unit (LE) according to one of claims 12 to 14,
**characterised in that** the read unit (LE) has means for activating the identification unit(s) (ID) in the manner that application of the energy supply causes the identification unit (ID) to output its identification code (IC) automatically when an adequate supply level is reached.

16. Method for identifying automation components (AK), in particular sensors, actuators and line components of an automation system (AS) with the following steps:
- assignment of an identification unit (ID) respectively to an automation component (AK),
- storage of an identification code (IC) for identifying the respective automation component (AK) in a storage unit of the identification unit (ID) and
- program-controlled and/or user-controlled reading of the identification code (IC) from the identification unit (ID),
**characterised in that** the identification unit(s) (ID) are activated in the manner that selective addressing of a predefinable component class causes the identification unit (ID) assigned to the predefinable component class to output its identification code (IC).

17. Method according to claim 16,
**characterised in that** the read unit (LE) is connected to a peripheral module (PG) and/or an operating device (14) of the automation system (AS) or is integrated in the peripheral module (PG) and/or in the operating device (14).

18. Method according to one of claims 16 or 17,
**characterised in that** the read unit (LE) activates the identification units (ID) and/or reads the identification codes (IC) of the connected automation components (AK).

19. Method according to one of claims 16 to 18,
**characterised in that** the read unit (LE) injects the energy required to supply the identification units (ID) into the peripheral channel (PK).

20. Method according to one of claims 16 to 19,
**characterised in that** the identification unit (ID) is made up of an electronic circuit and a connection to the automation component (AK) to be identified.

21. Method according to one of claims 16 to 20,
**characterised in that** the identification unit (ID) is configured as a separate unit for subsequent mounting on an automation component (AK) or as a unit connected inseparably to the automation component (AK)

22. Method according to one of claims 16 to 21,
**characterised in that** the identification unit(s) (ID) are activated in the manner that application of the energy supply causes the identification unit (ID) to output its identification code (IC) automatically when an adequate supply level is reached.

23. Method according to one of claims 16 to 22,
**characterised in that** when the automation system is switched on, the peripheral module (PG) automatically carries out an identification process for the connected automation components (AK), with the following procedure being followed for a peripheral channel (PK) in each instance:
- connection of the read unit (LE) to the peripheral channel (PKn),
- injection of energy into the peripheral channel (PKn),
- activation of the identification units (ID) and scanning of the identification codes (IC),
- termination of the energy injection and
- separation of the read unit (LE) from the peripheral channel (PKn).

24. Method according to claim 23,
**characterised in that** the procedure is followed sequentially for each of the existing N peripheral channels (PK) of a peripheral module (PG).

## Revendications

1. Système d'identification de composants d'automatisation (AK), notamment de capteurs, d'actionneurs et de composants de lignes d'un système d'automatisation (AS),
- avec une unité d'identification (ID) associée à chaque fois à un composant d'automatisation (AK),
- avec un code d'identification (IC) mémorisé dans l'unité d'identification (ID) et destiné à l'identification du composant d'automatisation respectif (AK), et
- avec une unité de lecture (LE) pour la lecture du code d'identification (IC) dans l'unité d'identification (ID),
**caractérisé par le fait que** le système comporte des moyens pour l'activation de la ou des unités d'identification (ID) de telle sorte que, par un adressage sélectif d'une classe de composants pouvant être prescrite, l'unité d'identification (ID) associée à la classe de composants pouvant être prescrite émet son code d'identification (IC).

2. Système selon la revendication 1,
**caractérisé par le fait que** l'unité de lecture (LE) est prévue pour la connexion à un module périphérique (2) et/ou à un appareil de commande (14) du système d'automatisation (AS).

3. Système selon l'une des revendications 1 ou 2,
**caractérisé par le fait que** l'unité de lecture (LE) est prévue pour l'activation des unités d'identification (ID) et/ou pour la demande des codes d'identification (IC) des composants d'automatisation raccordés (AK).

4. Système selon l'une des revendications 1 à 3,
**caractérisé par le fait que** l'unité de lecture (LE) est prévue pour l'introduction de l'énergie nécessaire à l'alimentation des unités d'identification (ID) dans le canal périphérique (PK).

5. Système selon l'une des revendications 1 à 4,
**caractérisé par le fait que** l'unité d'identification (ID) est formée à partir d'un circuit électronique et d'une connexion au composant d'automatisation (AK) à identifier.

6. Système selon l'une des revendications 1 à 5,
**caractérisé par le fait que** l'unité d'identification (ID) est conçue comme unité séparée en vue d'un ajout ultérieur à un composant d'automatisation (AK) ou comme unité reliée de manière inséparable au composant d'automatisation (AK).

7. Système selon l'une des revendications 1 à 6,
**caractérisé par le fait que** le système comporte des moyens pour l'activation de la ou des unités d'identification (ID) de telle sorte que, par l'application de l'alimentation en énergie, l'unité d'identification (ID) émet automatiquement son code d'identification (IC) lorsqu'un niveau d'alimentation suffisant est atteint.

8. Unité d'identification (ID) pour un système d'identification de composants d'automatisation (AK), notamment de capteurs, d'actionneurs et de composants de lignes d'un système d'automatisation (AS), l'unité d'identification (ID) étant prévue pour être associée à chaque fois à un composant d'automatisation (AK),
- avec un code d'identification (IC) mémorisé dans l'unité d'identification et destiné à l'identification du composant d'automatisation respectif (AK), et
- avec une unité d'émission pour l'émission du code d'identification (IC) de l'unité d'identification (ID) à une unité de lecture (LE),
**caractérisée par le fait que** l'unité d'identification (ID) comporte des moyens pour l'activation de l'unité d'émission de telle sorte que, par un adressage sélectif d'une classe de composants pouvant être prescrite, l'unité d'identification (ID) associée à la classe de composants pouvant être prescrite émet son code d'identification (IC).

9. Unité d'identification (ID) selon la revendication 8,
**caractérisée par le fait que** l'unité d'identification (ID) est formée à partir d'un circuit électronique et d'une connexion au composant d'automatisation (AK) à identifier.

10. Unité d'identification (ID) selon l'une des revendications 8 ou 9,
**caractérisée par le fait que** l'unité d'identification (ID) est conçue comme unité séparée en vue d'un ajout ultérieur à un composant d'automatisation (AK) ou comme unité reliée de manière inséparable au composant d'automatisation (AK).

11. Unité d'identification (ID) selon l'une des revendications 8 à 10,
**caractérisée par le fait que** l'unité d'émission de l'unité d'identification (ID) est conçue de telle sorte que l'unité d'identification (ID) émet automatiquement son code d'identification (IC) lorsqu'un niveau d'alimentation suffisant est atteint.

12. Unité de lecture (LE) pour un système d'identification de composants d'automatisation (AK), notamment de capteurs, d'actionneurs et de composants de lignes d'un système d'automatisation (AS), l'unité de lecture (LE) étant prévue pour la connexion à un module périphérique (PG) et/ou à un appareil de commande (14) du système d'automatisation (AS), notamment en vue d'une intégration dans le module périphérique (PG) et/ou dans l'appareil de commande (14), et comportant des moyens pour la réception d'un code d'identification (IC) émis par une unité d'identification (ID) d'un composant d'automatisation (AK),
**caractérisée par le fait que** l'unité de lecture (LE) comporte des moyens pour l'activation de la ou des unités d'identification (ID) de telle sorte que, par un adressage sélectif d'une classe de composants pouvant être prescrite, l'unité d'identification (ID) associée à la classe de composants pouvant être prescrite émet son code d'identification (IC).

13. Unité de lecture (LE) selon la revendication 12,
**caractérisée par le fait que** l'unité de lecture (LE) est prévue pour l'activation des unités d'identification (ID) et/ou pour la demande des codes d'identification (IC) des composants d'automatisation raccordés (AK).

14. Unité de lecture (LE) selon la revendication 12 ou 13,
**caractérisée par le fait que** l'unité de lecture (LE) est prévue pour l'introduction de l'énergie nécessaire à l'alimentation des unités d'identification (ID) dans le canal périphérique (PK).

15. Unité de lecture (LE) selon l'une des revendications 12 à 14,
**caractérisée par le fait que** l'unité de lecture (LE) comporte des moyens pour l'activation de la ou des unités d'identification (ID) de telle sorte que, par l'application de l'alimentation en énergie, l'unité d'identification (ID) émet automatiquement son code d'identification (IC) lorsqu'un niveau d'alimentation suffisant est atteint.

16. Procédé d'identification de composants d'automatisation (AK), notamment de capteurs, d'actionneurs et de composants de lignes d'un système d'automatisation (AS), avec les étapes suivantes :
- association d'une unité d'identification (ID) à chaque fois à un composant d'automatisation (AK),
- mémorisation d'un code d'identification (IC) pour l'identification du composant d'automatisation respectif (AK) dans une mémoire de l'unité d'identification (ID), et
- lecture, commandée par un programme et/ou par un utilisateur, du code d'identification (IC) dans l'unité d'identification (ID),
**caractérisé par le fait que** l'on active la ou les unités d'identification (ID) de telle sorte que, par un adressage sélectif d'une classe de composants pouvant être prescrite, l'unité d'identification (ID) associée à la classe de composants pouvant être prescrite émet son code d'identification (IC).

17. Procédé selon la revendication 16,
**caractérisé par le fait que** l'unité de lecture (LE) est connectée à un module périphérique (PG) et/ou à un appareil de commande (14) du système d'automatisation (AS) ou est intégrée dans le module périphérique (PG) et/ou dans l'appareil de commande (14).

18. Procédé selon l'une des revendications 16 ou 17,
**caractérisé par le fait que** l'unité de lecture (LE) active les unités d'identification (ID) et/ou lit les codes d'identification (IC) des composants d'automatisation raccordés (AK).

19. Procédé selon l'une des revendications 16 à 18,
**caractérisé par le fait que** l'unité de lecture (LE) introduit l'énergie nécessaire à l'alimentation des unités d'identification (ID) dans le canal périphérique (PK).

20. Procédé selon l'une des revendications 16 à 19,
**caractérisé par le fait que** l'unité d'identification (ID) est formée à partir d'un circuit électronique et d'une connexion au composant d'automatisation (AK) à identifier.

21. Procédé selon l'une des revendications 16 à 20,
**caractérisé par le fait que** l'unité d'identification (ID) est conçue comme unité séparée en vue d'un ajout ultérieur à un composant d'automatisation (AK) ou comme unité reliée de manière inséparable au composant d'automatisation (AK).

22. Procédé selon l'une des revendications 16 à 21,
**caractérisé par le fait que** l'on active la ou les unités d'identification (ID) de telle sorte que, par l'application de l'alimentation en énergie, l'unité d'identification (ID) émet automatiquement son code d'identification (IC) lorsqu'un niveau d'alimentation suffisant est atteint.

23. Procédé selon l'une des revendications 16 à 22,
**caractérisé par le fait que**, lors du branchement du système d'automatisation, le module périphérique (PG) effectue automatiquement une passe d'identification des composants d'automatisation raccordés (AK), la procédure ci-dessous étant exécutée pour chaque canal périphérique (PK) :
- branchement de l'unité de lecture (LE) sur le canal périphérique (PKn),
- introduction d'énergie dans le canal périphérique (PKn) ,
- activation des unités d'identification (ID) et demande des codes d'identification (IC),
- arrêt de l'alimentation en énergie, et
- séparation de l'unité de lecture (LE) du canal périphérique (PKn).

24. Procédé selon la revendication 23,
**caractérisé par le fait que** la procédure est exécutée de façon séquentielle pour chacun des N canaux périphériques existants (PK) d'un module périphérique (PG).
